# EUROPÄISCHE PATENTSCHRIFT

(11) **EP 0 771 705 B1**
(45) Veröffentlichungstag und Bekanntmachung des Hinweises auf die Patenterteilung: **14.04.1999**
(21) Anmeldenummer: 96113965.6
(22) Anmeldetag: 31.08.1996
(51) Int. Cl.: B60T 7/06

(54) **Bremspedal zur Ansteuerung einer elektrischen Bremsanlage**
Brake pedal for actuating an electric brake installation
Pédale du frein pour l'actionnement d'une installation de freinage électrique

(30) Priorität: 02.11.1995 DE 19540705
(43) Veröffentlichungstag der Anmeldung: 07.05.1997
(73) Patentinhaber: Continental Aktiengesellschaft, 30165 Hannover (DE)
(72) Erfinder: Bock, Martin, 30167 Hannover (DE); Dieckmann, Thomas, Dr., 30982 Pattensen (DE); Hauk, Stefan, 30173 Hannover (DE); Henken, Immanuel, 30880 Laatzen (DE)

(56) Entgegenhaltungen:
- DE-A- 3 504 096
- GB-A- 1 395 021
- US-A- 4 435 021

## Beschreibung

Die Erfindung betrifft ein Bremspedal in einem Kraftfahrzeug zur Ansteuerung einer elektrischen Bremsanlage, enthaltend eine Fußtrittplatte, über die eine Fußkraft an eine Feder weitergegeben wird, die unter Einwirkung der Fußkraft verformt wird und bei Wegnahme der Fußkraft ihre ursprüngliche Form annimmt und dadurch die Fußplatte in ihre Ausgangsposition zurückbewegt.

Ein derartiges Bremspedal ist aus der US 4,435,021 und aus der DE-OS 35 04 096 bekannt.

Es ist in der Vergangenheit bereits bekannt geworden, eine Fahrzeugbremsanlage von hydraulischer auf elektrische Betätigung umzustellen (Brake-By-Wire - BBW). Bei herkömmlichen Bremsanlagen weist das Bremspedal eine mechanische bzw. hydraulische Verbindung zu der Bremse auf und hat dadurch eine vorgegebene Kraft-/Weg-Charakteristik, die im Laufe der Entwicklung besonders gut auf das menschliche Regelverhalten abgestimmt worden ist. Insbesondere weist das Bremspedal von herkömmlichen Bremsanlagen eine progressive Kennung auf, d.h. mit zunehmendem zurückgelegten Weg des Bremspedals wird die auszuübende Kraft für eine zusätzliche Bremswirkung immer größer.

Im Gegensatz dazu weist bei BBW-Bremsanlagen das Bremspedal keine mechanische bzw. hydraulische Verbindung zu der Bremse auf, vielmehr reicht ein einfacher sensorischer Abgriff des Bremspedalweges, um den Verzögerungswunsch des Fahrers aufzunehmen.

Die von herkömmlichen Bremsanlagen bekannte Kraft-/Weg-Charakteristik des Bremspedals mit ihrer progressiven Kennung entfällt also und muß durch zusätzliche Maßnahmen am BBW-Bremspedal nachgebildet werden. Hierbei ist eine gute Nachbildung im Hinblick auf sicherheitstechnische Anforderungen besonders wünschenswert, da dann eine Umgewöhnung bei der Bedienung einer elektrischen Bremsanlage entfällt.

Aus der DE-OS 35 04 096 ist ein Bremspedal in einem Kraftfahrzeug zur Ansteuerung einer elektrischen Bremsanlage bekannt. Die auf die Trittplatte des Bremspedals ausgeübte Fußkraft wird über eine Gummi- bzw. eine Stahlfeder an einen Weg- bzw. Kraftsensor weitergegeben. Die Sensoren erfassen, um welchen Weg die Feder zusammengedrückt bzw. welche Kraft auf die Feder ausgeübt wird. Nach erfolgter Plausibilitätsprüfung in einer Auswerteelektronik - d.h., nach der Auswertung, ob die Signale des Wegsensors und des Kraftsensors in einem vorgegebenen Verhältnis zueinander stehen - werden die Bremsen mit einer Kraft entsprechend dem Signal am Kraftsensor beaufschlagt. Wird bei der Plausibilitätsprüfung festgestellt, daß die Signale der Sensoren von den Vorgaben abweichen, so werden - abhängig von der Abweichung - bestimmte Maßnahmen eingeleitet.

Obwohl die aus der DE-OS 35 04 096 bekannte Bremsanlage wegen der angesprochenen Plausibilitätsprüfung recht sicher ist, hat die Verwendung einer Gummifeder im Bremspedal jedoch den Nachteil, daß Gummi von der Umgebungstemperatur stark abhängige Materialeigenschaften aufweist. So ist die Gummifeder bei einer vergleichsweisen hohen Umgebungstemperatur (z.B. im Sommer) recht weich, wohingegen sie bei einer vergleichsweisen niedrigen Umgebungstemperatur (z.B. im Winter) recht hart ist. Aus diesem Grunde legt bei schwankender Umgebungstemperatur das Bremspedal bei gleicher Fußkraft einen anderen Weg zurück, was zu einer unerwünschten Veränderung der Kraft-/Weg-Charakteristik des Bremspedals führt. Darüber hinaus haben Gummifedern einen hohen Preis und benötigen zur Einstellung einer vorgegebenen Kraft-/Weg-Charakteristik eine exakte und somit technisch aufwendige Führung.

Bei der Verwendung einer Stahlfeder in dem Bremspedal ist man bezüglich der Materialeigenschaften zwar weitgehend unabhängig von der Umgebungstemperatur, es hat sich jedoch gezeigt, daß Schraubenfedern mit einer geeigneten Kraft-/Weg-Charakteristik recht groß sind und damit einen hohen Platzbedarf erfordern und das Gewicht des Bremspedals erhöhen.

Der Erfindung liegt die Aufgabe zugrunde, ein Bremspedal in einem Kraftfahrzeug zur Ansteuerung einer elektrischen Bremsanlage vorzustellen, das eine kompakte Bauart hat und das eine von der Umgebungstemperatur weitgehend unabhängige Kraft-/Weg-Charakteristik und eine gute Dosierbarkeit aufweist.

Die Aufgabe wird durch die kennzeichnenden Merkmale des Anspruchs 1 gelöst.

Aus der GB 1 395 021 ist zwar ebenfalls ein Bremspedal mit einem Tellerfederstapel bekannt, jedoch wird dieses Pedal nicht in einer elektrischen Bremsanlage eingesetzt und weist auch keine Dämpfung auf.

Die Vorteile der Verwendung eines Tellerfederstapels sind insbesondere darin zu sehen, daß diese nicht nur eine Gewichts- und Raumersparnis und eine weitgehende Unabhängigkeit der Kraft-/Weg-Charakteristik von der Umgebungstemperatur mit sich bringt, sondern auch die Einstellung einer sehr definierten Kraft-/Weg-Charakteristik ermöglicht, da der Tellerfederstapel aus einzelnen Tellerfedern besteht und daher eine große Flexibilität bezüglich der Zusammenstellung des Stapels besteht. Somit können unterschiedliche Kraftfahrzeughersteller das Bremspedal an die eigene "Pedalcharakteristik" einfach anpassen. Darüber hinaus sind Tellerfederstapel einfacher in der Herstellung als Elastomer- bzw. Schraubenfedern. Schließlich weisen Tellerfedern und damit der Tellerfederstapel eine - wenn auch geringe - Eigendämpfung auf.

Zur Verbesserung der Dosierbarkeit der Bremse wird erfindungsgemäß parallel zum Tellerfederstapel ein Dämpfer eingesetzt, mit Hilfe dessen das Bremspedal mit einer vorgegebenen definierten Dämpfung beaufschlagt werden kann. Gemäß einem Ausführungbeispiel wird eine Gasdämpfung, vorzugsweise eine Luftdämpfung verwendet. Hierbei ist es aus Gründen der Platzersparnis besonders vorteilhaft, wenn der Tellerfederstapel von einem Gehäuse, z. B. einem Zylinder umgeben wird, in den die Dämpfung integriert werden kann. Ferner ist es besonders vorteilhaft, wenn nur ein Teil des Tellerfederstapels mit einer Dämpfung beaufschlagt wird. Insbesondere ist es vorteilhaft, bei einem Tellerfederstapel, der aus einem weichen und aus einem harten Teilfederstapel zusammengesetzt ist, nur den harten Teilfederstapel mit einer Dämpfung zu beaufschlagen, da dann einerseits das unerwünschte schlagartige Losschnappen des Pedals beim Abrutschen des Fußes von der Fußtrittplatte verhindert wird (durch die Dämpfung des harten Teilfederstapels) und andererseits ein rasches, aber dennoch sanftes Einlaufen des Pedals in seine Ruhestellung gewährleistet ist (rasch wegen der fehlenden Dämpfung des weichen Tellerfederstapels und sanft wegen der Dämpfung des harten Tellerfederstapels). Alternativ ist es möglich, eine Öldämpfung zu verwenden, die an sich genauso aufgebaut werden kann, wie eine Gasdämpfung, wobei das Gehäuse, in dem die Dämpfung erzeugt wird, mit Öl anstatt mit Gas gefüllt wird. Schließlich kann die Dämpfung durch ein Elastomerbauteil erzeugt werden, was den Vorteil hat, daß eine zusätzliche Federwirkung erzeugt wird. Auch hier ist es aus Gründen der Platzersparnis besonders vorteilhaft, wenn das Elastomerbauteil den Tellerfederstapel konzentrisch umfaßt.

Gemäß einer Weiterbildung der Erfindung ist der Tellerfederstapel aus einzelnen Tellerfedern mit unterschiedlicher Kennung derart zusammengesetzt, daß der Tellerfederstapel die vom Kraftfahrzeughersteller gewünschte progressive Kennung aufweist. Dies kann beispielsweise dadurch erreicht werden, daß der Tellerfederstapel aus zwei Teilfederstapeln zusammengesetzt wird, die eine unterschiedliche Federhärte aufweisen. Hierbei ist es aus Gründen der Platzersparnis besonders vorteilhaft, wenn einer der Teilfederstapel den anderen Teilfederstapel konzentrisch umfaßt.

Weitere Vorteile der Erfindung und Ausführungsbeispiele werden im Zusammenhang mit den nachstehenden Figuren erläutert, darin zeigt:
- Fig. 1: ein gedämpftes Bremspedal in Seitenansicht
- Fig. 2: ein gedämpftes Bremspedal in Seitenansicht
- Fig. 3: ein Bremspedal in Seitenansicht
- Fig. 4: ein gedämpftes Bremspedal in Seitenansicht
- Fig. 5: ein gedämpftes Bremspedal in Seitenansicht
- Fig. 6: ein gedämpftes Bremspedal in Seitenansicht
- Fig. 7: ein gedämpftes Bremspedal in Seitenansicht.

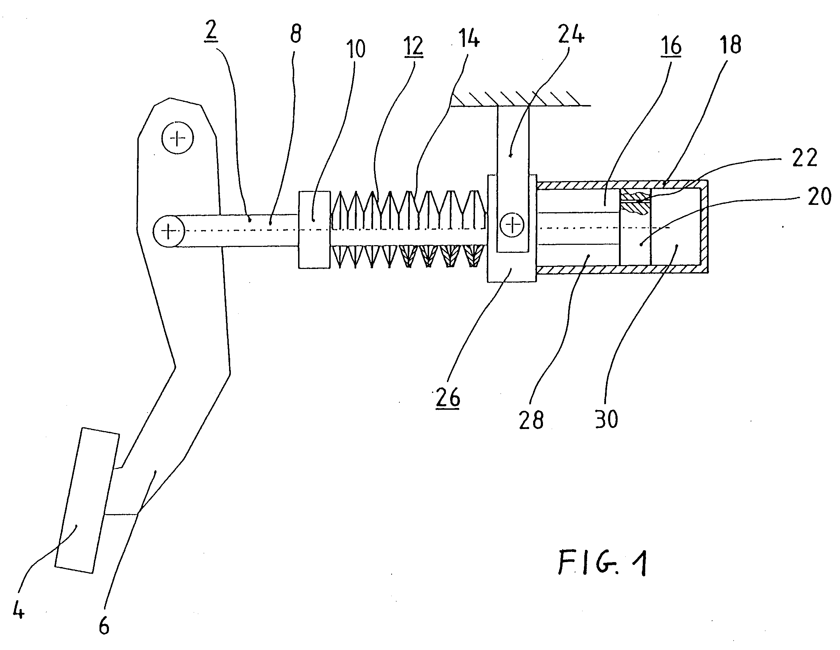

Figur 1 zeigt ein Bremspedal 2 in der Seitenansicht. Das Bremspedal 2 verfügt über eine Fußtrittplatte 4, die an einem biegesteifen, drehbar gelagerten Arm 6 befestigt ist. Der drehbar gelagerte Arm 6 ist mit einer Stange 8 verbunden, die durch eine Bohrung in dem Anschlag 26 der starren Aufhängung 24 geführt wird. Die Stange 8 verfügt über einen fest auf ihr montierten Anschlag 10 und zwischen diesem Anschlag 10 und dem oben genannten Anschlag 26 befindet sich ein Tellerfederstapel 12. Hierbei verfügen die einzelnen Tellerfedern 14 des Tellerfederstapels 12 jeweils über eine Bohrung, durch die die Stange 8 geführt wird. Die Tellerfedern 14 sind aus einem Material gefertigt, das von der Umgebungstemperatur weitgehend unabhängige Materialeigenschaften aufweist. Beispielhaft sei erwähnt, daß die Tellerfedern 14 aus Vergütungsstahl gefertigt sein können, der durch den Zusatz von Kohlenstoff gehärtet ist. Andere geeignete Materialien sind dem Fachmann jedoch bekannt.

Im Zusammenhang mit der Fig. 1 wird nunmehr ein Bremsvorgang erläutert. Bei einem Bremsvorgang wird auf die Fußtrittplatte 4 eine Fußkraft ausgeübt und der biegesteife, drehbar gelagerte Arm 6 wird in eine Drehbewegung versetzt. Diese Drehbewegung wird in eine Längsbewegung der Stange 8 umgewandelt, so daß die Stange 8 einen von der Fußkraft abhängigen Weg in Längsrichtung zurücklegt. Der zurückgelegte Weg wird durch einen nicht gezeigten Wegsensor gemessen und die ebenfalls nicht gezeigten Bremsen des Kraftfahrzeuges werden mit einer Bremskraft entsprechend dem Meßergebnis beaufschlagt.

Bei der Längsbewegung der Stange 8 wird der Anschlag 10 auf den Anschlag 26 der Aufhängung 24 zubewegt, so daß der Tellerfederstapel 12 zwischen den Anschlägen zusammengedrückt wird . Die Längenänderung des Tellerfederstapels 12 ist also direkt von der ausgeübten Fußkraft abhängig und die Kraft-/Weg-Charakteristik des Bremspedals 2 entspricht somit der Kraft-/Weg-Charakteristik des Tellerfederstapels 12. Es hat sich gezeigt, daß der Tellerfederstapel 12 bei einer vorgegebenen Kraft-/Weg-Charakteristik einen sehr kompakten und damit leichten Aufbau aufweist und somit besonders für den Einbau in Bremspedale für Kraftfahrzeuge geeignet ist. Darüber hinaus ist man bezüglich der Ausgestaltung der Kraft/Weg-Charakteristik sehr flexibel, da der Tellerfederstapel 12 aus einzelnen Tellerfedern 14 besteht, die entsprechend den Vorgaben gestapelt werden.

Insbesondere ist es möglich, den Tellerfederstapel 12 so auszubilden, daß er - und damit das Bremspedal 2 - eine progressive Kennung aufweist. (Hierunter ist zu verstehen, daß bei einer vorgegebenen Verkürzung des Tellerfederstapels 12 die für eine zusätzliche Verkürzung aufzuwendende Kraft immer stärker ansteigt. Dies bedeutet für die Bremsanlage, daß bei einer vorgegebenen Bremswirkung die für eine zusätzliche Bremswirkung auf das Bremspedal 2 auszuübende Fußkraft immer stärker ansteigt). In diesem Fall ist der Tellerfederstapel 12 aus einzelnen Tellerfedern 14 mit unterschiedlicher Kennung zusammengesetzt, so wie es auch in der Figur angedeutet ist. Eine progressive Kennung des Tellerfederstapels 12 kann beispielsweise dadurch erreicht werden, daß die Kraft, um die einzelnen Tellerfedern 14 zu verkürzen, in Richtung auf den starren Anschlag 26 ständig zunimmt (in den Figuren angedeutet durch die zunehmende Dicke der einzelnen Tellerfedern).

Das in der Fig. 1 gezeigte Bremspedal 2 verfügt zusätzlich über eine zu dem Tellerfederstapel 12 parallel geschaltete Dämpfung 16. Diese kann beispielsweise durch einen Hohlraumzylinder 18 realisiert werden, in dem sich der an der Stange 8 befestigte Kolben 20 befindet, der den Hohlraumzylinder 18 in die Kammern 28 und 30 unterteilt. Der Kolben 20 verfügt über mindestens eine Bohrung 22, durch die bei einem Bremsvorgang und entsprechender Bewegung des Kolbens 20 in Längsrichtung die Luft aus der Kammer 30 in die Kammer 28 gepreßt wird, was eine Dämpfung des Bremspedals 2 bewirkt (alternativ ist es auch möglich, auf die Bohrung 22 zu verzichten und die Passung zwischen dem Rand des Kolbens 20 und dem Hohlraumzylinder 18 so auszubilden, daß mit Hilfe des verbleibenden Spaltes zwischen dem Kolbenrand und dem Hohlraumzylinder 18 die gewünschte Dämpfung eingestellt wird). Hierbei ist die Einstellung einer definierten vorgegebenen Dämpfung, z.B. über den Durchmesser der Bohrung 22, sehr gut möglich. Bei Beendigung des Bremsvorganges, also bei Wegnahme der Fußkraft von der Fußtrittplatte 4 entspannt sich der Tellerfederstapel 12, so daß die Fußtrittplatte 4 sich in ihre Ausgangspostion zurückbewegt. Bei dem in der Fig. 1 gezeigten Ausführungsbeispiel ist auch diese Zurückbewegung der Fußtrittplatte in ihre Ausgangsposition gedämpft.

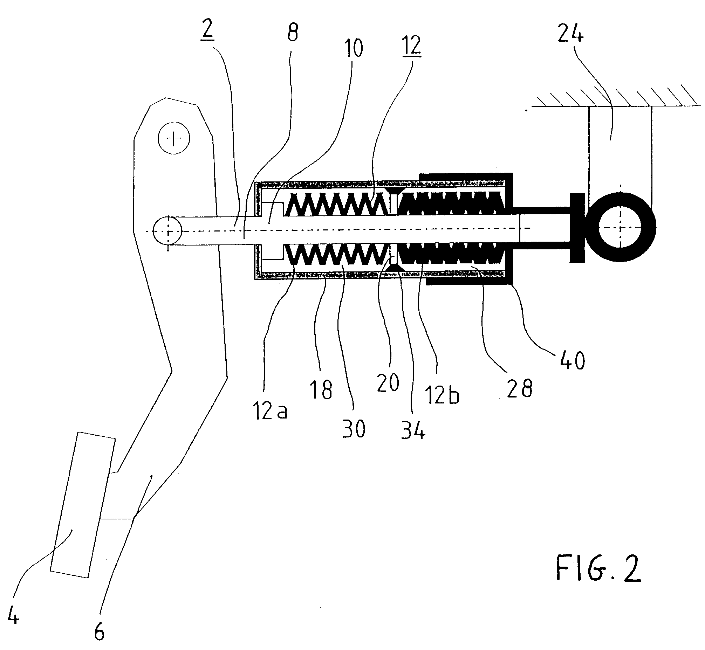

Die Figur 2 zeigt ein Bremspedal 2, das ebenfalls über eine Fußtrittplatte 4 verfügt, die an einem biegesteifen, drehbar gelagerten Arm 6 befestigt ist. Der drehbar gelagerte Arm 6 ist mit einer Stange 8 verbunden, die an der starren Aufhängung 24 gelagert ist. Die Stange 8 verfügt über einen fest auf ihr montierten Anschlag 10, an dessen von der Fußtrittplatte 4 abgewandten Seite sich ein Tellerfederstapel 12 anschließt. Der Tellerfederstapel 12 ist von einem Hohlraumzylinder 18 umgeben, dessen Boden 40 den hinteren Anschlag für den Tellerfederstapel 12 bildet. An einer beliebigen Stelle innerhalb des Hohlraumzylinders 18 befindet sich an der Stange 8 ein Kolben 20 mit einer Dichtlippe 34, der den Tellerfederstapel 12 in die Teilfederstapel 12a und 12b und den Hohlraumzylinder 18 in die Kammern 28 und 30 unterteilt. In dem gezeigten Ausführungsbeispiel ist der Teilfederstapel 12a weich ausgebildet, wohingegen der Teilfederstapel 12b hart ausgebildet ist, was durch die unterschiedlichen Dicken der einzelnen Tellerfedern angedeutet ist.

Im Zusammenhang mit der Figur 2 wird nunmehr ein Bremsvorgang erläutert. Bei einem Bremsvorgang wird auf die Fußtrittplatte 4 eine Fußkraft ausgeübt und der biegesteife, drehbar gelagerte Arm 6 wird in eine Drehbewegung versetzt. Diese Drehbewegung wird in eine Längsbewegung der Stange 8 umgewandelt, so daß die Stange 8 einen von der Fußkraft abhängigen Weg in Längsrichtung zurücklegt. Hierbei wird zunächst hauptsächlich der weiche Teilfederstapel 12a zusammengedrückt und erst wenn der Teilfederstapel 12a vollständig zusammengedrückt ist, findet eine merkliche Verkürzung des Teilfederstapels 12b unter dem Einfluß der Fußkraft statt. Die Verkürzung des Teilfederstapels 12a ist ungedämpft, wohingegen die Verkürzung des Teilfederstapels 12b gedämpft stattfindet, da die Luft in der Kammer 28 des Hohlraumzylinders 18 an der Dichtlippe 34 des Kolbens 20 vorbei in die Kammer 30 des Hohlraumzylinders 18 gedrückt werden muß. Bei der Wegnahme der Fußkraft von der Fußtrittplatte 4 findet die Entspannung des Teilfederstapels 12b entsprechend gedämpft statt, wohingegen die Entspannung des Teilfederstapels 12a ungedämpft ist. Durch die starke Dämpfung des harten Teilfederstapels 12b und durch die geringe bzw. verschwindende Dämpfung des Teilfederstapels 12a vermeidet man einerseits das unerwünschte schlagartige Losschnappen des Pedals beim Abrutschen des Fußes von der Fußtrittplatte 4, erreicht andererseits jedoch ein rasches, aber dennoch sanftes Einlaufen des Pedals in seine Ruhestellung.

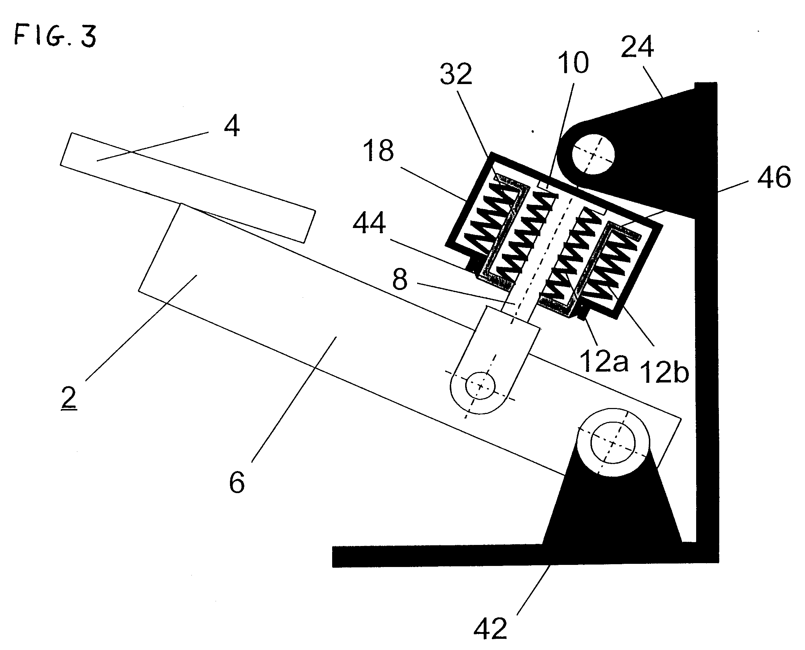

Figur 3 zeigt ein Bremspedal 2, das über eine Fußtrittplatte 4 verfügt, die an einem biegesteifen, an der Stütze 42 drehbar gelagerten Arm 6 befestigt ist. Zwischen dem Arm 6 und der Aufhängung 24 befindet sich drehbar gelagert ein federndes Element mit einem kompakten, insbesondere kurzen Aufbau. Aufgrund des kompakten Aufbaus ist das federnde Element auch dort zum Einbau geeignet, wo wenig Bauraum zur Verfügung steht. Der Aufbau des federnden Elementes wird im Folgenden erläutert: Das federnde Element enthält einen Topf 32, durch dessen Bohrung im Topfboden 44 eine Stange 8 mit einem Anschlag 10 geführt ist. Zwischen dem Anschlag 10 und dem Topfboden 44 befindet sich ein erster Tellerfederstapel 12a. Der Topf 32 enthält einen Kragen 46 und ist von einem Hohlraumzylinder 18 umgeben. Zwischen dem Kragen 46 und dem Boden des Hohlraumzylinders 18 befindet sich ein zweiter Tellerfederstapel 12b, der den ersten Tellerfederstapel 12a also konzentrisch umfaßt, was den kompakten Aufbau des federnden Elementes ermöglicht.

Im Zusammenhang mit der Figur 3 wird nunmehr ein Bremsvorgang erläutert, wobei davon ausgegangen wird, daß der Tellerfederstapel 12a weicher ist als der Tellerfederstapel 12b. Bei einem Bremsvorgang wird auf die Fußtrittplatte 4 eine Fußkraft ausgeübt und der biegesteife, drehbar gelagerte Arm 6 wird in eine Drehbewegung versetzt. Diese Drehbewegung wird in eine Längsbewegung der Stange 8 umgesetzt, wodurch sich der Anschlag 10 auf den Topfboden 44 zubewegt, so daß zunächst hauptsächlich der erste Tellerfederstapel 12a zwischen dem Anschlag 10 und dem Tellerboden 44 zusammengedrückt wird. Ist der erste Tellerfederstapel 12a vollständig zusammengedrückt und wird die Fußkraft auf die Fußtrittplatte 4 weiter gesteigert, so wird unter dem Einfluß dieser weiter gesteigerten Fußkraft der harte Tellerfederstapel 12b zusammengedrückt. Hierbei wird der Topf 32 aus der Bohrung des Hohlraumzylinders 18 "herausgezogen". Wegen der weichen Ausbildung des Tellerfederstapels 12a und der harten Ausbildung des Tellerfederstapels 12b weist die gesamte Federung und damit das Bremspedal 2 eine progressive Kennung auf. Selbstverständlich ist es auch möglich, den Tellerfederstapel 12b weich und den Tellerfederstapel 12a hart auszubilden, in diesem Fall kehrt sich der Bewegungsvorgang um, d. h. bei einem Bremsvorgang wird zuerst der Tellerfederstapel 12b und dann der Tellerfederstapel 12a zusammengedrückt.

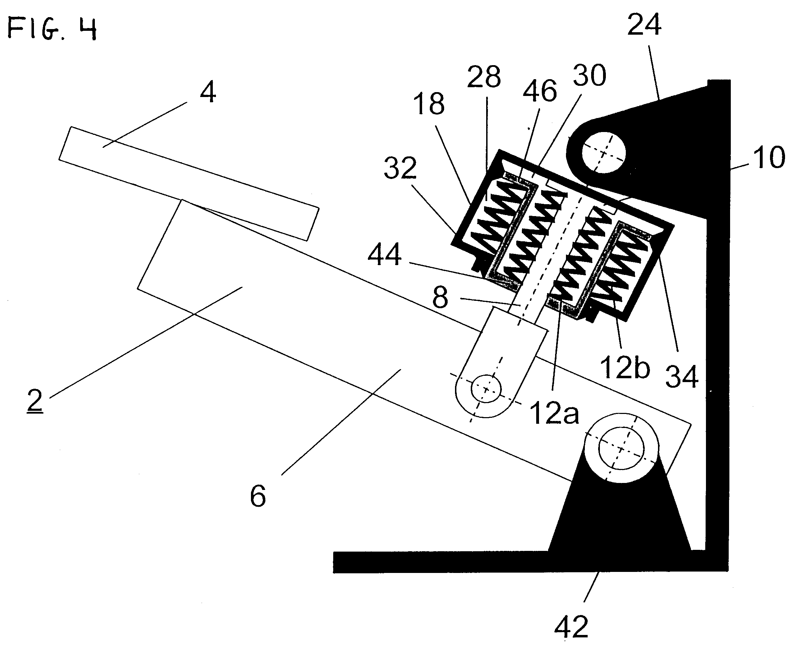

Figur 4 zeigt ein Bremspedal 2, das an sich genauso aufgebaut ist, wie das in der Figur 3 gezeigte Bremspedal 2, das jedoch zusätzlich über eine Dämpfung verfügt, die in dem in Zusammenhang mit der Figur 3 bereits erläuterten federnden Element integriert ist, so daß der kompakte Aufbau des federnden Elementes beibehalten bleibt. Die Dämpfung kann z. B. dadurch realisiert werden, daß an dem Kragen 46 des Topfes 32 eine Dichtlippe 34 angebracht wird, die den Hohlraumzylinder 18 in die Kammern 28 und 30 unterteilt. Wird bei einem Bremsvorgang der Kragen 46 auf den Boden des Hohlraumzylinders 18 zubewegt, so wird durch die Dichtlippe 34 das Strömen der Luft von der Kammer 28 in die Kammer 30 erschwert, was eine Dämpfung des Bremspedals beim Zusammendrücken des Tellerfederstapels 12b bewirkt. Bei Beendigung des Bremsvorganges entspannt sich der Tellerfederstapel 12b, so daß sich der Kragen 46 in seine Ausgangsposition zurückbewegt. Auch diese Zurückbewegung des Kragens 46 ist gedämpft. Zusätzlich kann auch der Anschlag 10 mit einer Dichtlippe versehen werden, so daß der von dem Topf 32 umfaßte Raum in zwei Kammern aufgeteilt wird, und in diesem Fall auch die Bewegung des Anschlags 10 in Richtung des Topfbodens 44 und die entsprechende Zurückbewegung gedämpft ist.

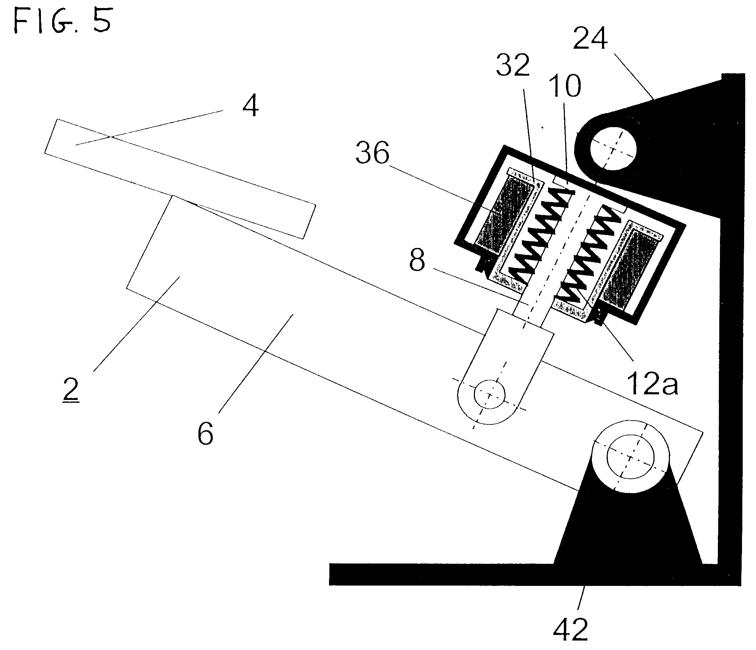

Figur 5 zeigt ein Bremspedal 2, das ebenfalls an sich genauso aufgebaut ist, wie das in der Figur 3 gezeigte Bremspedal 2, bei dem jedoch einer der beiden Tellerfederstapel 12a bzw. 12b durch ein Elastomerbauteil 36 ersetzt ist. (Bei dem in der Figur 5 gezeigten Ausführungsbeispiel ist der Tellerfederstapel 12b durch das Elastomerbauteil 36 ersetzt). Bei einem Bremsvorgang wird zunächst der weiche Tellerfederstapel 12a und danach das Elastomerbauteil 36 zusammengedrückt. Nach einem Bremsvorgang entspannt sich das Elastomerbauteil 36 und der Tellerfederstapel 12a, wobei das Zusammendrücken und die Entspannung des Elastomerbauteils 36 gedämpft vonstatten geht, wenn die viskoelastischen Eigenschaften des Elastomerbauteils 36 entsprechend gewählt werden. (Insbesondere darf das Elastomerbauteil 36 nicht ideal elastisch sein). Durch eine starke Dämpfung der Entspannung des Elastomerbauteils und durch eine geringe bzw. verschwindende Dämpfung des Tellerfederstapels 12a vermeidet man auch hier einerseits das unerwünschte schlagartige Losschnappen des Pedals beim Abrutschen des Fußes von der Fußtrittplatte 4, erreicht andererseits jedoch ein rasches, aber dennoch sanftes Einlaufen des Pedals in seine Ruhestellung.

Auch bei diesem Ausführungsbeispiel ist es möglich, das Zusammendrücken und die Entspannung des Tellerfederstapels 12a zu dämpfen, indem man z. B. den Anschlag 10 mit einer Dichtlippe versieht, wie es bereits im Zusammenhang mit der Figur 4 erläutert worden ist.

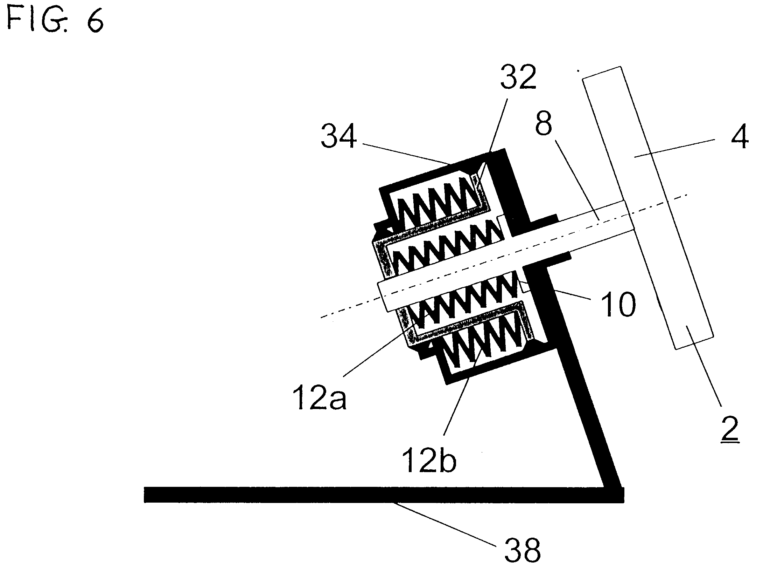

Figur 6 zeigt ein Bremspedal 2, das vollständig auf einem Winkel 38 montiert ist und das beim Betätigen eine reine Linearbewegung durchführt, so daß auf aufwendige Drehlager verzichtet werden kann. Der Boden des Winkels 38 kann beispielsweise das Bodenblech eines Kraftfahrzeuges sein, auf dem der restliche Teil des Bremspedals 2 montiert wird. Aufgrund des einfachen Aufbaus und der einfachen Montage des Bremspedals 2 kann das in der Figur 6 gezeigte Bremspedal 2 ohne konstruktive Änderungen sowohl auf der rechten als auch auf der linken Seite eines Kraftfahrzeuges eingebaut werden. Das federnde Element des in der Figur 6 gezeigten Bremspedals 2 ist genauso aufgebaut wie das in der Figur 3 gezeigte federnde Element und funktioniert dementsprechend auch genauso, so daß auf die entsprechenden Ausführungen im Zusammenhang mit der Figur 3 verwiesen wird.

Das in der Figur 6 gezeigte Bremspedal 2 verfügt ebenfalls über eine Dämpfung. Die Dämpfung wird hier genauso realisiert wie es bereits im Zusammenhang mit der Figur 4 erläutert worden ist.

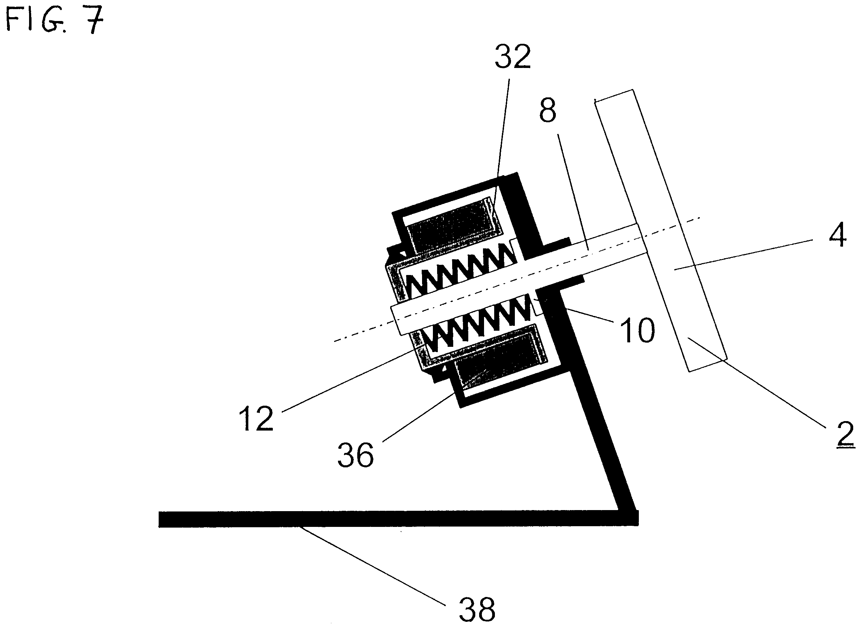

Figur 7 zeigt ein Bremspedal, das an sich genauso aufgebaut ist, wie das in der Figur 5 gezeigte Bremspedal und ebenfalls über eine Dämpfung verfügt, die hier wiederum mit Hilfe eines Elastomerbauteils 36 realisiert ist. Auch hier sei bezüglich der Funktion auf die entsprechenden Ausführungen im Zusammenhang mit der Figur 5 verwiesen.

## Patentansprüche

1. Bremspedal (2) in einem Kraftfahrzeug zur Ansteuerung einer elektrischen Bremsanlage, enthaltend eine Fußtrittplatte (4), über die eine Fußkraft an eine Feder (12) weitergegeben wird, die unter Enwirkung der Fußkraft verformt wird und bei Wegnahme der Fußkraft ihre ursprüngliche Form annimmt und dadurch die Fußtrittplatte (4) in ihre Ausgangsposition zurückbewegt,
**dadurch gekennzeichnet**,
daß die Feder (12) aus einem Tellerfederstapel (12) besteht und daß parallel zu dem Tellerfederstapel (12) eine Dämpfung (16) eingesetzt wird, durch die eine definierte Pedaldämpfung erzeugt wird.

2. Bremspedal (2) nach Anspruch 1, dadurch gekennzeichnet, daß die Dämpfung (16) eine Gasdämpfung ist.

3. Bremspedal (2) nach Anspruch 1, dadurch gekennzeichnet, daß die Dämpfung (16) eine Öldämpfung ist.

4. Bremspedal (12) nach Anspruch 1, dadurch gekennzeichnet, daß die Dämpfung durch ein Elastomerbauteil (36) erzeugt wird.

5. Bremspedal (2) nach Anspruch 4, dadurch gekennzeichnet, daß das Elastomerbauteil (36) den Tellerfederstapel (12) konzentrisch umfaßt.

6. Bremspedal (2) nach einem der Ansprüche 1 bis 5, dadurch gekennzeichnet, daß der Tellerfederstapel (12) aus einzelnen Tellerfedern (14) mit unterschiedlicher Kennung zusammengesetzt ist, so daß der Tellerfederstapel (12) eine insgesamt progressive Kennung hat.

7. Bremspedal (2) nach Anspruch 6, dadurch gekennzeichnet, daß der Tellerfederstapel (12) aus mindestens zwei Teilfederstapeln (12a) und (12b) besteht, die eine unterschiedliche Federhärte aufweisen.

8. Bremspedal (2) nach Anspruch 7, dadurch gekennzeichnet, daß ein Teilfederstapel (12b) den anderen Teilfederstapel (12a) konzentrisch umfaßt.

## Claims

1. Brake pedal (2) in an automotive vehicle for actuating an electric braking system, including a foot-operated plate (4), via which a foot force is transmitted to a spring (12), which is deformed by the effect of the foot force and assumes its original configuration, if the foot force is removed, and thereby moves the foot-operated plate (4) back into its initial position, characterised in that the spring (12) comprises a stack of plate springs (12), and in that a damping means (16) is inserted parallel to the stack of plate springs (12), by means of which damping a specific pedal damping is produced.

2. Brake pedal (2) according to claim 1, characterised in that the damping (16) is a gas damping.

3. Brake pedal (2) according to claim 1, characterised in that the damping (16) is an oil damping.

4. Brake pedal (2) according to claim 1, characterised in that the damping is produced by an elastomeric component part (36).

5. Brake pedal (2) according to claim 4, characterised in that the elastomeric component part (36) concentrically surrounds the stack of plate springs (12).

6. Brake pedal (2) according to one of claims 1 to 5, characterised in that the stack of plate springs (12) comprises individual plate springs (14) of variable spring rates, so that the stack of plate springs (12) has a generally progressive spring rate.

7. Brake pedal (2) according to claim 6, characterised in that the stack of plate springs (12) comprises at least two partial stacks of springs (12a) and (12b), which have a variable spring hardness.

8. Brake pedal (2) according to claim 7, characterised in that a partial stack of springs (12b) concentrically surrounds the other partial stack of springs (12a).

## Revendications

1. Pédale de frein (2) incluse dans un véhicule automobile pour la commande d'une installation de freinage électrique, comprenant une plaque (4) de pédale de frein par l'intermédiaire de laquelle une force appliquée par un pied est transmise à un ressort (12) qui se déforme sous l'action de la force appliquée par le pied et qui reprend sa forme initiale lors de la disparition de la force appliquée par le pied et, sous cet effet, ramène la plaque de pédale (4) à sa position de départ,
caractérisée
en ce que le ressort (12) est constitué par un empilement (12) de rondelles Belleville et en ce que, parallèlement à l'empilement (12) de rondelles Belleville, est intercalé un moyen d'amortissement (16) qui produit un amortissement défini de la pédale.

2. Pédale de frein (2) selon la revendication 1, caractérisée en ce que le moyen d'amortissement (16) est un moyen d'amortissement à gaz.

3. Pédale de frein (2) selon la revendication 1, caractérisée en ce que le moyen d'amortissement (16) est un moyen d'amortissement à huile.

4. Pédale de frein (2) selon la revendication 1, caractérisée en ce que l'amortissement est produit par un élément en élastomère (36).

5. Pédale de frein (2) selon la revendication 4, caractérisée en ce que l'élément en élastomère (36) entoure concentriquement l'empilement de rondelles Belleville (12).

6. Pédale de frein (2) selon une des revendications 1 à 5, caractérisée en ce que l'empilement de rondelles Belleville (12) est composé de plusieurs rondelles Belleville (14) qui ont des caractéristiques différentes, de sorte que l'empilement de rondelles Belleville (12) possède une caractéristique d'ensemble progressive.

7. Pédale de frein (2) selon la revendication 6, caractérisée en ce que l'empilement de rondelles Belleville (12) est composé d'au moins deux empilements de rondelles Belleville (12a, 12b) qui présentent des raideurs de ressorts différentes.

8. Pédale de frein (2) selon la revendication 7, caractérisée en ce qu'un empilement de rondelles Belleville (12b) entoure concentriquement l'autre empilement de rondelles Belleville (12a).
